# EUROPÄISCHE PATENTSCHRIFT

(11) **EP 2 403 761 B1**
(45) Veröffentlichungstag und Bekanntmachung des Hinweises auf die Patenterteilung: **02.03.2016**
(21) Anmeldenummer: 10709397.3
(22) Anmeldetag: 02.03.2010
(51) Int. Cl.: B64D 11/06

(54) **FLUGGASTSITZVORRICHTUNG**
FLIGHT PASSENGER SEATING DEVICE
SIÈGE DE PASSAGER D'AVION

(30) Priorität: 03.03.2009 DE 102009011387
(43) Veröffentlichungstag der Anmeldung: 11.01.2012
(73) Patentinhaber: Recaro Aircraft Seating GmbH & Co. KG, 74523 Schwäbisch Hall (DE)
(72) Erfinder: SCHÜRG, Hartmut, 74523 Schwäbisch Hall (DE); ERB, Andreas, 74523 Schwäbisch Hall (DE); JAKUBOWSKI, Jens, 73527 Schwäbisch Hall (DE)
(74) Vertreter: Daub, Thomas
(86) Internationale Anmeldenummer: PCT/EP2010/001276
(87) Internationale Veröffentlichungsnummer: WO 2010/099926

(56) Entgegenhaltungen:
- EP-A1- 0 639 479
- EP-A2- 1 839 533
- DE-A1-102005 022 165
- DE-C1- 10 135 122
- JP-A- 6 072 220
- US-A- 3 902 755
- US-A1- 2004 051 003

## Beschreibung

### Stand der Technik

Die Erfindung geht aus von einer Fluggastsitzvorrichtung mit einer Rückenlehne. Sitzvorrichtungen zur Bestuhlung von Flugzeugkabinen sind herkömmlicherweise mit einer Rückenlehne ausgestattet, die entweder relativ zu einer Sitzfläche zwischen einer aufrechten Position und einer geneigten Komfortposition beweglich gelagert ist (siehe, z.B., Das Dokument EP0639479A1), die mit einer Sitzaufständereinheit starr gekoppelt ist, um, insbesondere im Hinblick auf eine Nutzung bei Kurzstreckenflügen, eine hohe Anzahl von Sitzreihen zu erreichen, mit welchen die Flugzeugkabine bestuhlt wird.

Der Erfindung liegt die Aufgabe zugrunde, eine Fluggastsitzvorrichtung bereitzustellen, die vorteilhafte Eigenschaften im Hinblick auf einen von einem Fluggastsitz beanspruchten Raum und zudem einen hohen Komfort für einen Passagier bietet.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fluggastsitzvorrichtung mit einer Rückenlehne, die eine erste Rückenlehneneinheit aufweist.

Es wird vorgeschlagen, dass die Rückenlehne eine zweite Rückenlehneneinheit und eine Lagereinheit aufweist, die die zweite Rückenlehneneinheit relativ zur ersten Rückenlehneneinheit beweglich lagert. Es kann dadurch innerhalb eines Bauraums des Fluggastsitzes, der herkömmlicherweise für die Rückenlehne vorgesehen ist, eine vorteilhafte Beweglichkeit von Rückenlehnenkomponenten geschaffen werden, wobei beispielsweise eine Komfortposition für einen Passagier zur Verfügung gestellt werden kann, ohne dafür einen weiteren Raum in Anspruch nehmen zu müssen. Diese Erfindung eignet sich insbesondere für den Einsatz bei einem Fluggastsitz, wobei der Passagierkomfort bei unveränderter Bestuhlung einer Flugzeugkabine, insbesondere bei unverändertem Abstand zwischen zwei sukzessiven Sitzreihen, auf signifikante Weise erhöht werden kann. Dieser Vorteil kommt insbesondere zur Geltung, wenn die erste Rückenlehneneinheit mit einer Aufständereinheit der Fluggastsitzvorrichtung starr verbunden ist, die zu deren Aufständern auf einem Flugzeugkabinenboden vorgesehen ist. Die Aufständereinheit kann vorzugsweise Sitzfüße, eine Tragrohreinheit und/oder einen oder mehrere Sitzteiler aufweisen und kann mehrere benachbarte Flugzeugsitze einer Sitzreihe miteinander verbinden.

Unter einer "Rückenlehneneinheit" soll insbesondere ein einstückiges Bauteil der Rückenlehne oder ein Ensemble von Bauteilen der Rückenlehne verstanden werden, die miteinander derart starr verbunden sind, dass die Bewegung einer Rückenlehneneinheit als eine Bewegung eines starren Körpers betrachtet wird. Die Lagereinheit kann beispielsweise eine Schwenkachseneinheit aufweisen, mittels welcher die zweite Rückenlehneneinheit Schwenkbewegungen relativ zur ersten Rückenlehneneinheit ausführen kann.

In einer bevorzugten Ausführung der Erfindung wird vorgeschlagen, dass zumindest die zweite Rückenlehneneinheit eine Auflagefläche zur Auflage einer Polstereinheit bildet. Besonders vorteilhaft ist, wenn die erste Rückenlehneneinheit und die zweite Rückenlehneneinheit eine Auflagefläche zur Auflage der Polstereinheit bilden. In diesem Zusammenhang wird vorgeschlagen, dass die erste Rückenlehneneinheit und die zweite Rückenlehneneinheit im Zusammenwirken eine Auflagefläche zur Auflage einer Polstereinheit bilden, wobei die zweite Rückenlehneneinheit zumindest einen überwiegenden Teil der Auflagefläche bildet. Hierdurch kann ein hoher Passagierkomfort erreicht werden, da ein Großteil der Rückenlehne beweglich ausgeführt sein kann.

Insbesondere ist die von der zweiten Rückenlehneneinheit gebildete Auflagefläche dem Rumpfbereich des Fluggastsitzes zugeordnet. Hiermit entspricht die Bemessung der Auflagefläche der zweiten Rückenlehneneinheit vorzugsweise zumindest der Bemessung eines überwiegenden Teils des Rumpfbereichs des Fluggastsitzes. Um eine besonders komfortable Abstützung des gesamten Rumpfbereichs eines Passagiers zu erreichen, entspricht die Bemessung der Auflagefläche in Bezug auf eine Schulterbreite und eine Rumpflänge insbesondere zumindest der gesamten Rumpferstreckung eines Passagiers durchschnittlicher Körpergröße. In Bezug auf die Rumpflänge erstreckt sie sich bevorzugt von einem Beckenbereich bis zu einem Schulterbereich des Fluggastsitzes. Hierbei weist sie - bezogen auf die Erstreckung der Rückenlehne in deren Längsrichtung - eine Erstreckung auf, die vorteilhaft zumindest 30%, insbesondere zumindest 50% der gesamten Erstreckung der Rückenlehne in deren Längsrichtung beträgt. Bezüglich einer Schulterbreite erstreckt sich, in Bezug auf eine Sitzquerrichtung, die parallel zu einem Flugzeugkabinenboden und senkrecht zur Flugrichtung ausgerichtet ist, die von der zweiten Rückenlehneneinheit gebildete Auflagefläche vorzugsweise über zumindest 70%, vorteilhaft über zumindest 80% der Erstreckung der Rückenlehne in Sitzquerrichtung. Eine einem Kopfstützenbereich zugeordnete Auflagefläche ist vorzugsweise von der ersten Rückenlehneneinheit gebildet.

Zur Bildung einer Auflagefläche weist die erste und/oder die zweite Rückenlehneneinheit vorzugsweise eine Platte auf, die eine vorzugsweise als kontinuierliche, zusammenhängende Oberfläche ausgebildete Auflagefläche bildet, an welcher die Polstereinheit im montierten Zustand anliegt und die im Wesentlichen parallel zu einer von der Polstereinheit gebildeten Rückenlehnenfläche ausgerichtet ist. Insbesondere weist die von den Rückenlehneneinheiten gebildete Auflagefläche eine Flächenerstreckung auf, die zumindest einem überwiegenden Teil der Rückenlehnenfläche entspricht.

Es kann eine besonders platzsparende Ausführung erreicht werden, wenn die erste Rückenlehneneinheit einen Rückenlehnenrahmen mit zumindest zwei Rahmenteilen aufweist und die zweite Rückenlehneneinheit zwischen den Rahmenteilen angeordnet ist. Hierbei bezieht sich der Begriff "zwischen" auf die Sitzquerrichtung des Fluggastsitzes. Der Rückenlehnenrahmen dient herkömmlicherweise als Grundstruktur der Rückenlehne und ist vorzugsweise U-förmig ausgebildet, wobei die zweite Rückenlehneneinheit beispielsweise zwischen den vorzugsweise als Schenkeln ausgebildeten Rahmenteilen beweglich gelagert ist.

Eine besonders einfache und intuitive Betätigung der zweiten, beweglichen Rückenlehneneinheit kann erreicht werden, wenn zumindest die zweite Rückenlehneneinheit eine Auflagefläche zur Auflage einer Polstereinheit bildet, die Lagereinheit die zweite Rückenlehneneinheit zwischen zwei Endpositionen relativ zur ersten Rückenlehneneinheit beweglich lagert und die Rückenlehne eine Kopplungseinheit aufweist, die derart ausgelegt ist, dass eine auf die Auflagefläche ausgeübte Kraft eine Bewegung der zweiten Rückenlehneneinheit aus einer Endposition bewirkt. Besonders bevorzugt wird die auf die Auflagefläche der zweiten Rückenlehneneinheit ausgeübte Kraft mittels einer Bewegung erzeugt, welche der Passagier mit seinem Rücken ausführt. Dadurch, dass eine Rückenbewegung des Passagiers die Bewegung der zweiten Rückenlehneneinheit bewirkt, kann eine besonders intuitive Bedienung des Fluggastsitzes erreicht werden. Ferner kann dadurch vorteilhafterweise auf weitere Betätigungsmittel zum Auslösen der Bewegung der zweiten Rückenlehneneinheit und/oder Ver- bzw. Entriegelungsmittel verzichtet werden. Die Kopplungseinheit koppelt die zweite Rückenlehneneinheit mit einem weiteren Bauteil, das vorzugsweise mit der ersten Rückenlehneneinheit starr verbunden ist. Dieses Bauteil kann Bestandteil der ersten Rückenlehneneinheit, einer Aufständereinheit, einer Sitzbodenlagereinheit, einer Armlehneneinheit usw. sein.

Die Endpositionen können beispielsweise durch Anschlagmittel und/oder von der Kopplungseinheit aus eigener Kraft festgelegt werden. Beispielsweise können die Endpositionen als stabile Endpositionen durch die Kopplungseinheit mittels eines Totpunkt-, Fang- oder Überzenterungsmechanismus festgelegt werden. Dies kann besonders einfach erreicht werden, wenn die Kopplungseinheit ein Federelement aufweist. Beispielsweise kann das Federelement als Totpunktfeder ausgebildet sein. In einer vorteilhaften Ausführungsvariante können die Federhärte und/oder der maximale Federweg des Federelements durch ein Einstellmittel eingestellt werden, um die erreichten Endpositionen an die Körpergröße des Passagiers anpassen zu können.

Der Passagierkomfort kann ferner weiter erhöht werden, wenn die Rückenlehne eine dritte Rückenlehneneinheit und eine Lagervorrichtung aufweist, die die dritte Rückenlehneneinheit relativ zur zweiten Rückenlehneneinheit beweglich lagert. Mittels der Lagereinheit ist die dritte Rückenlehneneinheit, die von der ersten Rückenlehneneinheit unterschiedlich ist, vorzugsweise relativ zur ersten Rückenlehneneinheit beweglich. Die Lagervorrichtung kann beispielsweise eine Schwenkachseneinheit aufweisen, mittels welcher die dritte Rückenlehneneinheit Schwenkbewegungen relativ zur zweiten Rückenlehneneinheit ausführen kann.

In einer bevorzugten Ausgestaltung der Erfindung wird vorgeschlagen, dass die dritte Rückenlehneneinheit eine Lordosenstütze aufweist. Unter einer "Lordosenstütze" soll insbesondere ein Bauteil verstanden werden, das zur Stützung des menschlichen Körpers im unteren Wirbelsäulenbereich, insbesondere ausschließlich in diesem Bereich, vorgesehen ist. Hierfür ist die Lordosenstütze vorzugsweise im untersten Bereich der Rückenlehne angeordnet, wobei - bezogen auf die Erstreckung der Rückenlehne in deren Längsrichtung - sich die Lordosenstütze vorteilhaft über zumindest 25%, jedoch um maximal 40% der Längserstreckung der Rückenlehne erstreckt.

Die Bedienung der Fluggastsitzvorrichtung kann ferner dadurch vorteilhaft vereinfacht werden, dass die Rückenlehne ein Koppelgetriebe aufweist, das bei einer Bewegung der zweiten Rückenlehneneinheit relativ zur ersten Rückenlehneneinheit eine Bewegung der dritten Rückenlehneneinheit relativ zur zweiten Rückenlehneneinheit bewirkt. Hierzu weist das Koppelgetriebe vorteilhaft Kopplungspunkte auf, die an der zweiten Rückenlehneneinheit, an der dritten Rückenlehneneinheit bzw. an einem Bauteil angebracht sind, das vorzugsweise mit der ersten Rückenlehneneinheit starr verbunden ist. Dieses Bauteil kann Bestandteil der ersten Rückenlehneneinheit, einer Aufständereinheit, einer Sitzbodenlagereinheit, einer Armlehneneinheit usw. sein. Das Koppelgetriebe verbindet diese Kopplungspunkte derart miteinander, dass eine Bewegung der zweiten Rückenlehneneinheit relativ zur ersten Rückenlehneneinheit zum Antreiben einer Bewegung der dritten Rückenlehneneinheit relativ zur zweiten Rückenlehneneinheit benutzt wird. Insbesondere weist das Koppelgetriebe eine Koppel auf, die dazu dient, bei einer Bewegung der zweiten Rückenlehneneinheit in eine Komfortposition die Lordosenstütze automatisch in eine Lordosenstützposition zu bewegen.

In einer weiteren Ausführung der Erfindung wird vorgeschlagen, dass die zweite Rückenlehneneinheit eine Lordosenstütze aufweist, die Lagereinheit die Lordosenstütze zwischen zumindest zwei stabilen Positionen relativ zur ersten Rückenlehneneinheit beweglich lagert und eine mechanische Betätigungseinheit vorgesehen ist, die zum Auslösen einer Bewegung der Lordosenstütze aus einer stabilen Position dient. Dadurch kann eine Einstellmöglichkeit für einen Passagier geschaffen werden, wobei ein besonders kleiner Bauraum durch die Betätigungseinheit beansprucht wird. Unter einer "mechanischen Betätigungseinheit" soll insbesondere eine Betätigungseinheit verstanden werden, die ausschließlich mechanische Betätigungsglieder aufweist, wobei auf pneumatische und/oder elektronische Betätigungsglieder verzichtet wird. Hierbei weist die Betätigungseinheit vorzugsweise ein von einem Bediener betätigbares Betätigungsglied auf, das mit zumindest einem weiteren mechanischen Betätigungsglied wirkungsmäßig verbunden ist und mittels dessen eine Bewegung der Lordosenstütze relativ zur ersten Rückenlehneneinheit angetrieben werden kann. Durch den Verzicht auf pneumatische und/oder elektronische Mittel kann ein großer Bauraum eingespart werden. Die stabilen Positionen können als Endpositionen oder als Zwischenpositionen ausgebildet sein.

Es kann eine besonders kompakte Ausführungsform erreicht werden, wenn die mechanische Betätigungseinheit einen Hebelmechanismus aufweist. Insbesondere können mittels einer kompakten Anordnung von Bauteilen große Kräfte übertragen werden. In einer bevorzugten Ausführung weist der Hebelmechanismus Hebelglieder auf, die einen Kniehebel bilden.

Ferner wird vorgeschlagen, dass die Betätigungseinheit zwei Betätigungsglieder aufweist, die beidseitig der Lordosenstütze angeordnet sind und voneinander unabhängig betätigbar sind, wodurch eine hohe Flexibilität in der Einstellung von Komfortpositionen erreicht werden kann. Hierbei bezieht sich der Begriff "beidseitig" auf die Sitzquerrichtung eines Fluggastsitzes. Ferner kann auf eine Kopplungsvorrichtung zur Kopplung der Betätigungsglieder verzichtet werden, wodurch weiterer Bauraum eingespart werden kann.

Außerdem wird vorgeschlagen, dass die erste Rückenlehneneinheit einen Rückenlehnenrahmen mit zumindest einem Rahmenteil aufweist und die Betätigungseinheit ein vom Passagier betätigbares Betätigungsglied umfasst, das am Rahmenteil angeordnet ist, wodurch eine platzsparende Anordnung der Betätigungseinheit erreicht werden kann. Eine besonders effiziente Bauraumnutzung kann ferner erreicht werden, wenn die Betätigungseinheit Betätigungsglieder aufweist, die an gegenüberliegenden Seiten des Rahmenteils angeordnet sind.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Fluggastsitzes mit einer ersten, fixen und einer zweiten, beweglichen Rückenlehneneinheit,
- Fig. 2a: eine schematische Darstellung einer Kopplung zwischen der ersten Rückenlehneneinheit und der zweiten Rückenlehneneinheit in einer aufrechten Position,
- Fig. 2b: die schematische Darstellung der Figur 2a in einer geneigten Position der beweglichen Rückenlehneneinheit,
- Fig. 3: die Ansicht der Figur 1 in einer alternativen Ausführung des Fluggastsitzes mit einer dritten, als Lordosenstütze ausgebildeten Rückenlehneneinheit,
- Fig. 4: eine schematische Darstellung einer Kopplung zwischen den Rückenlehneneinheiten in der Ausführung aus Figur 3,
- Fig. 5: eine perspektivische Ansicht der Kopplung aus Figur 4,
- Fig. 6: eine perspektivische Ansicht des Fluggastsitzes in einer alternativen Ausführung mit einer beweglichen Lordosenstütze, die durch einen Hebelmechanismus betätigbar ist,
- Fig. 7a: eine Detailansicht des Hebelmechanismus in einer Stützposition der Lordosenstütze und
- Fig. 7b: die Ansicht aus Figur 7a bei angeklappter Lordosenstütze.

### Beschreibung der Ausführungsbeispiele

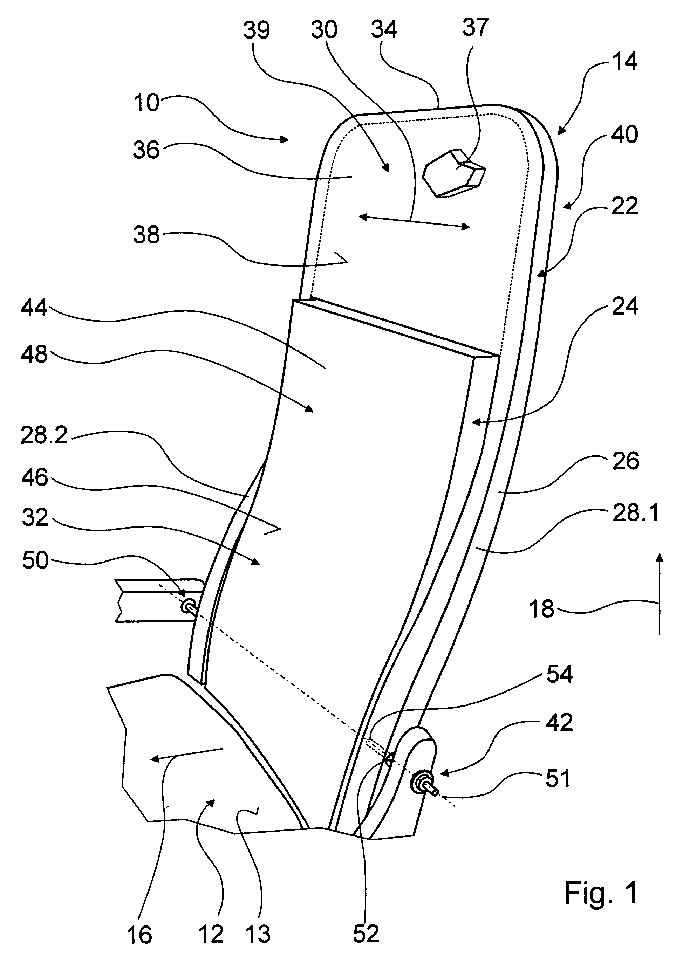

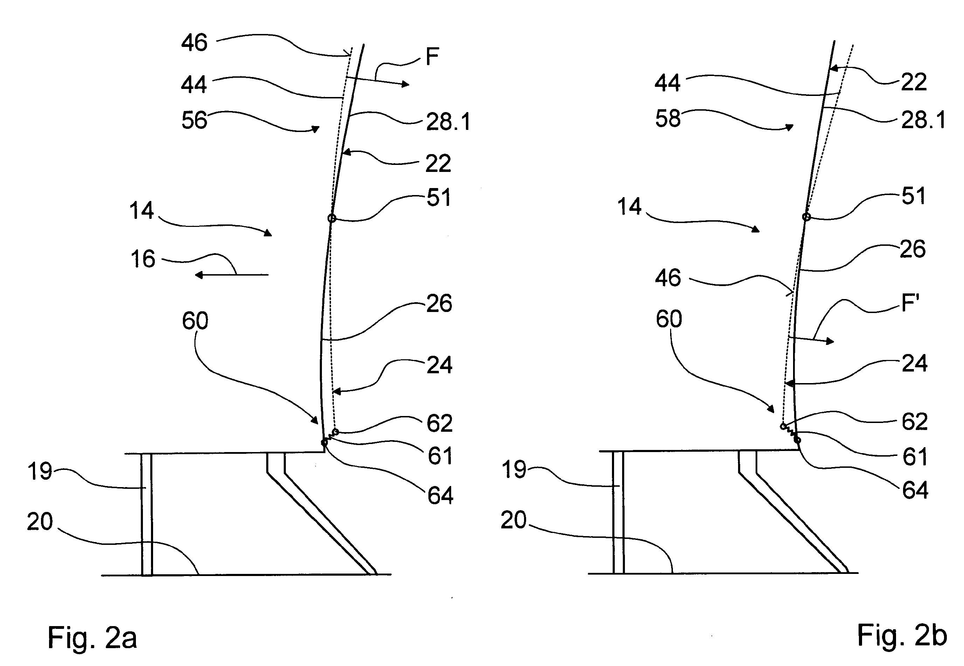

Figur 1 zeigt einen Fluggastsitz 10 in einer perspektivischen Ansicht. Dieser weist eine Sitzeinheit 12, welche eine Sitzfläche 13 bildet, und eine Rückenlehne 14 auf, welche sich im Bezug auf eine Sitzrichtung 16 und eine vertikale Richtung 18 hinter und oberhalb der Sitzeinheit 12 erstreckt. Der Fluggastsitz 10 umfasst ferner eine Aufständereinheit 19 (siehe Figur 2), die zum Aufständern der Sitzeinheit 12 und der Rückenlehne 14 auf einem Flugzeugkabinenboden 20 vorgesehen ist. Unter der Sitzrichtung 16 soll eine Richtung verstanden werden, die parallel zum Flugzeugkabinenboden 20 und senkrecht zur vorderen Kante der Sitzeinheit 12 ausgerichtet ist und von der Rückenlehne 14 wegführt. Die Sitzrichtung 16 entspricht typischerweise der Flugrichtung. Unter der vertikalen Richtung 18 soll eine Richtung verstanden werden, die senkrecht zum Flugzeugkabinenboden 20 ausgerichtet ist. In dieser Beschreibung beziehen sich die Begriffe "vor", "hintern", "vorne", "Frontseite", "Vorderseite", "Rückseite" usw. auf die Sitzrichtung 16. Ferner beziehen sich die Begriffe "oben", "unten", "oberhalb", "unterhalb" usw. auf die vertikale Richtung 18.

Die Rückenlehne 14 weist eine erste Rückenlehneneinheit 22 und eine zweite Rückenlehneneinheit 24 auf. Die Rückenlehneneinheit 22 weist einen Rückenlehnenrahmen 26 auf, der als ein U-förmig gebogenes Bauteil ausgeformt ist. Dieses weist zwei Rahmenteile 28.1, 28.2 auf, die jeweils einem Schenkel der U-Form entsprechen und sich in Längsrichtung der Rückenlehne 14 erstrecken. Die Rahmenteile 28.1, 28.2 sind als längliche Bauteile ausgebildet, die, bezüglich einer Sitzquerrichtung 30, an gegenüberliegenden Seiten der Rückenlehne 14 angeordnet sind. Unter der Sitzquerrichtung 30 soll eine Richtung verstanden werden, die parallel zum Flugzeugkabinenboden 20 und senkrecht zur Sitzrichtung 16 ausgerichtet ist. Die Rahmenteile 28.1 und 28.2 sind voneinander in Sitzquerrichtung 30 beabstandet und bilden einen Zwischenraum 32, in welchem die zweite Rückenlehneneinheit 24 angeordnet ist. Die Rahmenteile 28.1 und 28.2 sind mittels eines weiteren Rahmenteils 34 miteinander verbunden, welches sich horizontal in Sitzquerrichtung 30 erstreckt und im Zusammenwirken mit den Rahmenteilen 28 die U-Form bildet. An der Frontseite des Rückenlehnenrahmens 26 ist eine Abdeckung 36 angebracht, die eine Auflagefläche 38 zur Auflage einer Rückenlehnenpolstereinheit 37 in einem Kopfstützenbereich 39, der zu einer Stützung des Passagierkopfs vorgesehen ist, bildet. Die Rückenlehnenpolstereinheit 37 ist der Übersichtlichkeit halber lediglich teilweise dargestellt. Die Abdeckung 36 kann beispielsweise am Rückenlehnenrahmen 26 mittels Schrauben (nicht dargestellt) befestigt sein. Die Auflagefläche 38 ist in diesem Ausführungsbeispiel durch die Abdeckung 36 gebildet; es ist alternativ denkbar, dass die Auflagefläche 38 durch einen Teilbereich des Rückenlehnenrahmens 26 gebildet ist. Die Auflagefläche 38 im Kopfstützenbereich 39 erstreckt sich in Sitzquerrichtung 30 von einer Seite der Rückenlehne 14 bis zur gegenüberliegenden Seite der Rückenlehne 14.

In den betrachteten Ausführungsbeispielen ist die erste Rückenlehneneinheit 22 mit der Aufständereinheit 19 starr verbunden (siehe Figur 2), so dass keine Neigungsbewegung der ersten Rückenlehneneinheit 22 relativ zur Sitzeinheit 12 und zur Aufständereinheit 19 zugelassen ist. Dadurch kann vorteilhaft ein Raum für einen hinter dem Fluggastsitz 10 sitzenden Passagier gewonnen werden. Durch die vorliegende Erfindung kann in dieser bezüglich eines beanspruchten Raums vorteilhaften Konfiguration trotzdem ein hoher Komfort für einen im Fluggastsitz 10 sitzenden Passagier erreicht werden.

Erfindungsgemäß ist eine Fluggastsitzvorrichtung 40 vorgesehen, die die Rückenlehne 14 mit den Rückenlehneneinheiten 22, 24 und eine Lagereinheit 42 aufweist, welche die zweite Rückenlehneneinheit 24 relativ zur ersten Rückenlehneneinheit 22 beweglich lagert. Die zweite Rückenlehneneinheit 24 weist eine Rückenlehnenplatte 44 auf. Im betrachteten Ausführungsbeispiel ist die Rückenlehnenplatte 44 als ein Tiefziehteil aus Polykarbon ausgebildet, wobei weitere, dem Fachmann als sinnvoll erscheinende Ausführungen denkbar sind. Die Rückenlehnenplatte 44 ist im Zwischenraum 32 angeordnet, welcher in Bezug auf die Sitzquerrichtung 30 seitlich durch die Rahmenteile 28.1, 28.2 begrenzt ist und in Bezug auf die Längsrichtung der Rückenlehne 14 durch die Auflagefläche 38 im Kopfstützenbereich 39 nach oben begrenzt ist. Die Vorderseite der Rückenlehnenplatte 44 bildet eine Auflagefläche 46, die zur Auflage der Rückenlehnenpolstereinheit 37 in einem Rumpfbereich 48 dient, der zu einer Stützung des Rumpfs des Passagiers vorgesehen ist. Die Auflageflächen 38 und 46 bilden im Zusammenwirken eine Fläche, die zumindest einem Großteil der gesamten, für einen Passagier nutzbaren Rückenlehnenfläche der Rückenlehnenpolstereinheit 37 entspricht. Insbesondere entsprechen die Auflageflächen 38 und 46 zumindest 80% der gesamten Rückenlehnenfläche der Rückenlehnenpolstereinheit 37. Die von der Rückenlehnenplatte 44 gebildete Auflagefläche 46, die dem Rumpfbereich 48 der Rückenlehnenpolstereinheit 37 zugeordnet ist, erstreckt sich vom unteren Randbereich der Rückenlehne 14 im Bereich der Sitzeinheit 12 bis zu einer Höhe relativ zur Sitzeinheit 12, die dem Schulterbereich eines Passagiers von durchschnittlicher Größe entspricht. Hierzu weist die Rückenlehnenplatte 44 eine Erstreckung in Längsrichtung der Rückenlehne 14 auf, die zwischen 50% und 80%, vorzugsweise zwischen 60% und 70% der gesamten Länge der Rückenlehne 14 beträgt. Hierbei bilden die erste Rückenlehneneinheit 22 und die zweite Rückenlehneneinheit 24 im Zusammenwirken eine gesamte Auflagefläche zur Auflage der Rückenlehnenpolstereinheit 37 aus, wobei die zweite Rückenlehneneinheit 24 mit deren Auflagefläche 46 einen überwiegenden Teil, d.h. mehr als 50% der gesamten Auflagefläche bildet. Die Auflagefläche 38, die dem Kopfstützenbereich 39 der Rückenlehnenpolstereinheit 37 zugeordnet ist, erstreckt sich vom oberen Rand der Rückenlehnenplatte 44 bis zum oberen Rand der Rückenlehne 14 und weist demnach eine Erstreckung in Längsrichtung der Rückenlehne 14 auf, die vorzugsweise zwischen 20% und 50%, vorteilhafterweise zwischen 30% und 40% der gesamten Länge der Rückenlehne 14 beträgt.

Die Lagereinheit 42 lagert die zweite Rückenlehneneinheit 24 derart an der ersten Rückenlehneneinheit 22, dass sie Schwenkbewegungen der Rückenlehneneinheit 24 relativ zur Rückenlehneneinheit 22 zulässt. Hierzu weist die Lagereinheit 42 eine Schwenkachseneinheit 50 auf, welche eine Schwenkachse 51 bildet, die sich in Sitzquerrichtung 30 parallel zum Flugzeugkabinenboden 20 erstreckt und um welche die zweite Rückenlehneneinheit 24 schwenkbar ist. Die Lagereinheit 42 weist Befestigungsmittel 52 auf, die die Schwenkachseneinheit 50 an den seitlichen Rahmenteilen 28.1, 28.2 fixieren. Die Schwenkachseneinheit 50 greift an der Rückenlehnenplatte 44, und zwar beidseitig an den Seitenflächen der Rückenlehnenplatte 44 an Kopplungspunkten 54 an, die - auf die Längsrichtung der Rückenlehne 14 bezogen - in der unteren Hälfte, vorzugsweise im untersten Drittel der Rückenlehnenplatte 44 angeordnet sind. Somit ist die Schwenkachse 51, auf die Längsrichtung der Rückenlehne 14 bezogen, im untersten Viertel der Rückenlehne 14 angeordnet.

Die Figuren 2a und 2b zeigen den Fluggastsitz 10 in einer stark schematisierten Seitenansicht. Der Klarheit halber sind lediglich die Rückenlehne 14 mit der ersten Rückenlehneneinheit 22, die die Rahmenteile 28 des Rückenlehnenrahmens 26 aufweist, und mit der zweiten Rückenlehneneinheit 24, die die Rückenlehnenplatte 44 aufweist, und die Aufständereinheit 19 dargestellt. Der Klarheit halber und zur Unterscheidung vom Rahmenteil 28 ist die Rückenlehnenplatte 44 schematisch durch eine gestrichelte Linie dargestellt.

In Figur 2a befindet sich die Rückenlehnenplatte 44 in einer ersten Endposition 56, in welcher der obere Rand der Rückenlehnenplatte 44 nach vorne geschwenkt ist. Diese Endposition 56 entspricht einer ersten, aufrechten Sitzposition des Passagiers, die z.B. als aufrechte oder "upright" Position bezeichnet ist. Figur 2b zeigt die Rückenlehnenplatte 44 in einer zweiten Endposition 58, in welcher der obere Rand der Rückenlehnenplatte 44 über die erste Rückenlehneneinheit 22 hinaus nach hinten geschwenkt ist. Diese Endposition 58 entspricht einer zweiten, nach hinten geneigten Sitzposition des Passagiers, die z.B. als Komfortposition oder "recline position" bezeichnet ist. Die Lagereinheit 42 lässt Schwenkbewegungen der Rückenlehnenplatte 44 zwischen diesen Endpositionen 56, 58 zu.

Die Rückenlehne 14 weist ferner eine Kopplungseinheit 60 auf, welche die zweite Rückenlehneneinheit 24 mit einem Bauteil koppelt, das mit der ersten Rückenlehneneinheit 22 starr verbunden ist. Die Kopplungseinheit 60 ist einerseits an einem ersten Kopplungspunkt 62 an der Rückenlehnenplatte 44 gekoppelt und andererseits an einem Kopplungspunkt 64 dieses Bauteils, wobei dieser Kopplungspunkt 64 mit der ersten Rückenlehneneinheit 22 starr verbunden ist. In der gezeigten schematischen Darstellung ist der Kopplungspunkt 64 ein Punkt des Rückenlehnenrahmens 26 der ersten Rückenlehneneinheit 22. Ist die Rückenlehne 14 relativ zur Aufständereinheit 19 beweglich gelagert, so ist der Kopplungspunkt 64 ebenfalls relativ zur Aufständereinheit 19 beweglich gelagert. Da die erste Rückenlehneneinheit 22 im betrachteten Ausführungsbeispiel jedoch mit der Aufständereinheit 19 starr verbunden ist, ist der Kopplungspunkt 64 der Kopplungseinheit 60 mit der Aufständereinheit 19 starr verbunden. In alternativen Ausführungsbeispielen kann der Kopplungspunkt 64 ein Punkt eines weiteren, mit der Aufständereinheit 19 starr verbundenen Bauteils sein. Ferner kann der Kopplungspunkt 64 ein Punkt der Aufständereinheit 19, der Sitzeinheit 12, einer Sitzbodenlagereinheit oder einer Armlehneneinheit sein.

In der Erfindung weist die Kopplungseinheit 60 ein als Federmittel ausgebildetes Kopplungsmittel 61 auf. Dieses Kopplungsmittel 61, welches den Kopplungspunkt 62 der zweiten Rückenlehneneinheit 24 mit dem Kopplungspunkt 64 verbindet, erzeugt eine Federkraft, mittels welcher die Kopplungseinheit 60 die Endpositionen 56, 58 als stabile Endpositionen festlegt. Im gezeigten Ausführungsbeispiel ist das Kopplungsmittel 61 als Totpunktfeder ausgebildet. In der von der Rückenlehnenplatte 44 angenommenen Endposition 56 befindet sich das Kopplungsmittel 61 in einem vorgespannten Zustand. Das Kopplungsmittel 61 sucht die Rückenlehnenplatte 44 in der Endposition 56 zu halten. Beispielsweise kann durch die Vorspannung die Rückenlehnenplatte 44 gegen einen nicht näher dargestellten Anschlag gedrückt werden. Um die bewegliche Rückenlehneneinheit 24 in die zweite Endposition 58 zu bewegen, muss die Vorspannkraft des Kopplungsmittels 61 überwunden werden. Dies erfolgt auf eine besonders einfache Weise, indem der Passagier durch eine Rückenbewegung eine Kraft F auf den Teil der Auflagefläche 46, der oberhalb der Schwenkachse 51 angeordnet ist, ausübt. Wird beim Bewegen der Rückenlehnenplatte 44 der Totpunkt des Kopplungsmittels 61 überwunden, entspannt sich das Kopplungsmittel 61 in Richtung der zweiten Endposition 58. In der in Figur 2b gezeigten Konfiguration sucht das Kopplungsmittel 61 die Rückenlehnenplatte 44 in der zweiten Endposition 58 zu halten. Das Kopplungsmittel 61 ist beispielsweise in der zweiten Endposition 58 leicht vorgespannt und drückt die Rückenlehnenplatte 44 gegen einen nicht dargestellten Anschlag, oder die Endposition 58 ist durch den maximalen Federweg des Kopplungsmittels 61 festgelegt, wobei sich das Kopplungsmittel 61 in dieser zweiten Endposition 58 in dessen entspanntem Zustand befindet. Zur Bewegung der Rückenlehnenplatte 44 aus der zweiten Endposition 58 muss diese mittels einer durch eine Rückenbewegung des Passagiers auf die Auflagefläche 46 im Bereich unterhalb der Schwenkachse 51 ausgeübten Kraft F' gegen die vom Kopplungsmittel 61 erzeugte Federkraft bewegt werden.

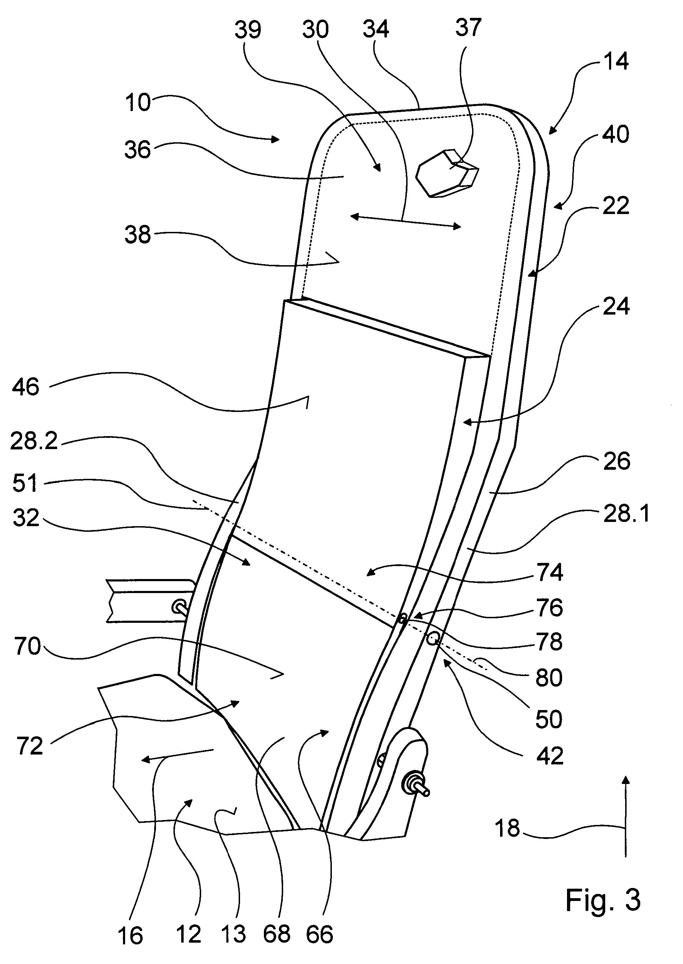

Die Figuren 3, 4 und 5 zeigen den Fluggastsitz 10 in einer weiteren Ausführung der erfindungsgemäßen Fluggastsitzvorrichtung 40. Der Übersichtlichkeit halber werden Bauteile, deren Aufbau und/oder Funktion dem oben beschriebenen Ausführungsbeispiel entspricht, mit dem gleichen Bezugszeichen bezeichnet und es wird auf die obige Beschreibung verwiesen, um unnötige Wiederholungen zu vermeiden. Die folgende Beschreibung beschränkt sich demnach auf die Unterschiede zum oben erläuterten Ausführungsbeispiel.

Wie der Figur 3 zu entnehmen ist, weist die Rückenlehne 14 in dieser Ausführung eine dritte Rückenlehneneinheit 66 auf. Diese ist als eine Lordosenstütze 68 in der Form einer Platte ausgebildet. Die dritte Rückenlehneneinheit 66 bildet eine Auflagefläche 70 zur Auflage der Rückenlehnenpolstereinheit 37 in einem Lordosenbereich 72. Diese Auflagefläche 70 ist demnach im unteren Bereich der Rückenlehne 14 angeordnet und erstreckt sich vom unteren Randbereich der Rückenlehne 14 bis zu einem Koppelbereich 74, in dem die Lordosenstütze 68 an der Rückenlehnenplatte 44 gekoppelt ist. Die Auflagefläche 70 weist eine Erstreckung in Längsrichtung der Rückenlehne 14 auf, die zwischen 30% und 50% der gesamten Erstreckung der Rückenlehne 14 in deren Längsrichtung beträgt. Ferner weist die Rückenlehne 14 eine Lagervorrichtung 76 auf, die die Lordosenstütze 68 der dritten Rückenlehneneinheit 66 relativ zur zweiten Rückenlehneneinheit 24 beweglich lagert. Hierzu weist die Lagervorrichtung 76 eine Schwenkachseneinheit 78 auf, die eine Schwenkachse 80 bildet, um welche die Lordosenstütze 68 an der zweiten Rückenlehneneinheit 24 schwenkbar gelagert ist. Im gezeigten Ausführungsbeispiel fallen die Schwenkachse 51, um welche die Rückenlehnenplatte 44 der zweiten Rückenlehneneinheit 24 relativ zur ersten Rückenlehneneinheit 22 schwenkbar gelagert ist, und die Schwenkachse 80 zusammen.

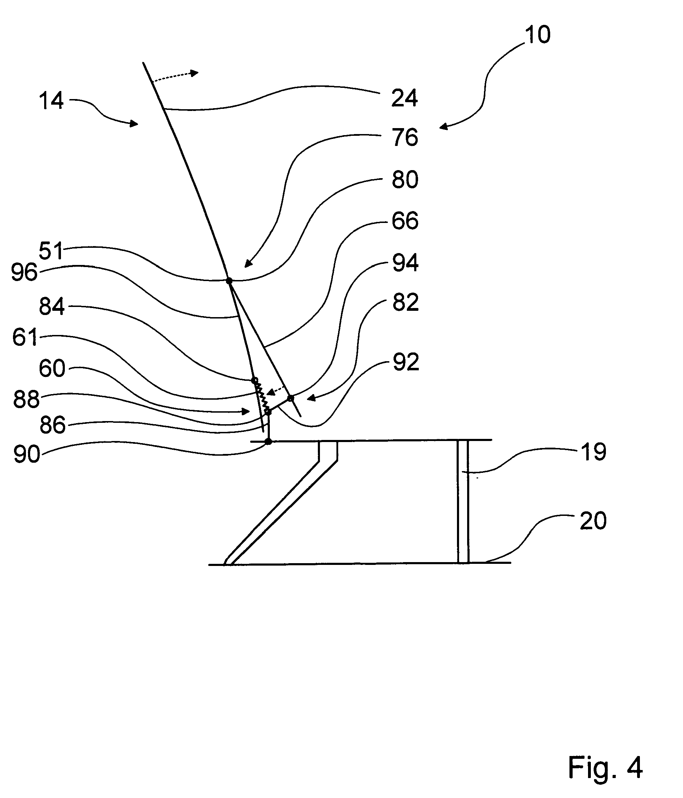

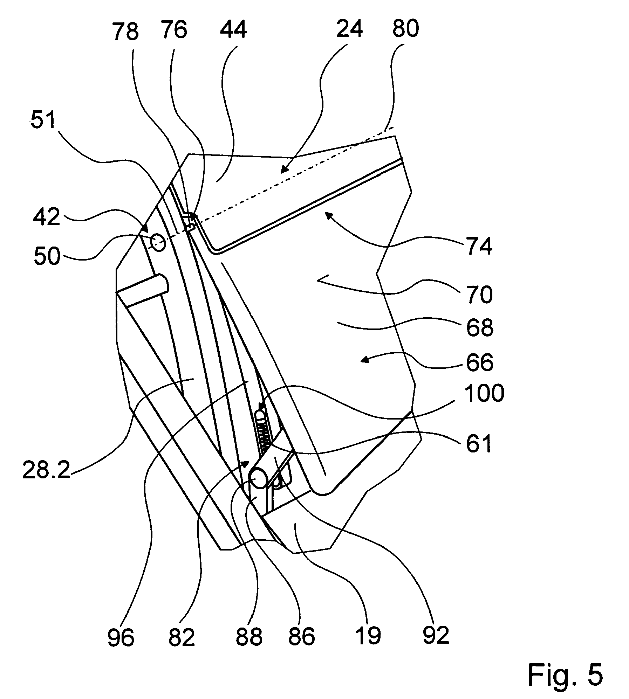

Die Rückenlehne 14 weist ferner ein Koppelgetriebe 82 auf, das bei einer Bewegung der zweiten Rückenlehneneinheit 24 relativ zur ersten Rückenlehneneinheit 22 eine Bewegung der dritten Rückenlehneneinheit 66 relativ zur zweiten Rückenlehneneinheit 24 bewirkt. Das Koppelgetriebe 82 ist in der Detailansicht der Figur 5 dargestellt, wobei die relative Anordnung der Rückenlehneneinheiten 24, 66 und der Elemente des Koppelgetriebes 82 der Klarheit halber in einer stark schematisierten Darstellung in Figur 4 gezeigt ist.

In Figur 4 sind der Flugzeugkabinenboden 20 und die Aufständereinheit 19 dargestellt. Von der Rückenlehne 14 sind der Klarheit halber lediglich die zweite und die dritte Rückenlehneneinheit 24, 66 sowie das Koppelgetriebe 82 gezeigt. Wie oben schon beschrieben, ist die zweite Rückenlehneneinheit 24 um die Schwenkachse 51 relativ zur ersten Rückenlehneneinheit 22 schwenkbar gelagert. Zur Erläuterung der Ausführung dieser Bewegung durch eine Rückenbewegung des Passagiers wird auf die obige Beschreibung verwiesen. Im betrachteten Ausführungsbeispiel ist die zweite Rückenlehneneinheit 24 über die Kopplungseinheit 60 mit der Aufständereinheit 19 starr gekoppelt. Hierzu weist die Kopplungseinheit 60 das als Federelement ausgebildete Kopplungsmittel 61 auf, das an einem ersten Ende an einem mit der zweiten Rückenlehneneinheit 24 festen Kopplungspunkt 84 mit der zweiten Rückenlehneneinheit 24 gekoppelt ist. Die Kopplungseinheit 60 weist ferner eine Kopplungsstange 86 auf, die einerseits an einem Kopplungspunkt 88 mit dem zweiten Ende des Kopplungsmittels 61 und andererseits an einem mit der Aufständereinheit 19 festen Kopplungspunkt 90 mit der Aufständereinheit 19 gekoppelt ist. Die dritte Rückenlehneneinheit 66 ist, wie oben schon erörtert, um die Schwenkachse 80 relativ zur zweiten Rückenlehneneinheit 24 schwenkbar gelagert, wobei die Schwenkachsen 51 und 80 zusammenfallen. Zur Kopplung der Bewegung zwischen den ersten und zweiten Rückenlehneneinheiten 22, 24 mit der Bewegung der dritten Rückenlehneneinheit 66 relativ zur zweiten Rückenlehneneinheit 24 ist das Koppelgetriebe 82 vorgesehen, das die Kopplungsstange 86 und eine Koppel 92 aufweist, die die Kopplungsstange 86 mit der dritten Rückenlehneneinheit 66 koppelt. Die Koppel 92 ist einerseits an einem Kopplungspunkt 94 der dritten Rückenlehneneinheit 66 mit dieser Rückenlehneneinheit 66 gekoppelt und greift andererseits an den Kopplungspunkt 88 des Kopplungsmittels 61 an.

Das Koppelgetriebe 82 greift demnach einerseits am Kopplungspunkt 94 der dritten Rückenlehneneinheit 66 und andererseits am Kopplungspunkt 90 an, der an einem mit der ersten Rückenlehneneinheit 22 fest verbundenden Bauteil, und zwar im betrachteten Ausführungsbeispiel insbesondere an der Aufständereinheit 19 angeordnet ist. In weiteren Ausführungen kann der Kopplungspunkt 90 an einer Sitzbodenlagereinheit oder direkt an der ersten Rückenlehneneinheit 22, wie z.B. am Rückenlehnenrahmen 26, angebracht sein. Ferner ist das Koppelgetriebe 82 über das verformbare Kopplungsmittel 61 mit der zweiten Rückenlehneneinheit 24 verbunden, so dass eine relative Bewegung des zweiten Rückenlehnenteils 24 relativ zur ersten Rückenlehneneinheit 22 und demnach relativ zur Aufständereinheit 19 eine Bewegung der dritten Rückenlehneneinheit 66 relativ zur zweiten Rückenlehneneinheit 24 auslöst. Die Kopplungspunkte 88, 90, 94 sind als Gelenkpunkte ausgebildet. Ferner sind die Kopplungspunkte 84, 88, 94 relativ zur ersten Rückenlehneneinheit 22 und insbesondere zur Aufständereinheit 19 beweglich.

Der Fluggastsitz 10 ist in Figur 4 in einer Konfiguration gezeigt, in der sich die zweite Rückenlehneneinheit 24 in der zweiten Endposition 58 befindet, die der oben genannten Komfortposition oder "recline position" entspricht (Figur 2b). Durch eine Bewegung der zweiten Rückenlehneneinheit 24 von der zweiten Endposition 58 in die erste Endposition 56 (Figur 2a), die der oben genannten aufrechten oder "upright" Position entspricht, wird mittels des Koppelgetriebes 82 die dritte Rückenlehneneinheit 66 um die Schwenkachse 80 nach hinten geschwenkt, bis sie in der ersten Endposition 56 der zweiten Rückenlehneneinheit 24 an einem Element 96 der zweiten Rückenlehneneinheit 24 angeklappt ist. Die Bewegungen der zweiten Rückenlehneneinheit 24 und der dritten Rückenlehneneinheit 66 bei dem Übergang zwischen der Endposition 58 (geneigte Position) und der Endposition 56 (aufrechte Position) sind in Figur 4 mittels gestrichelter Pfeile dargestellt. In der Endposition 56, die in Figur 3 dargestellt ist, bilden die Auflagefläche 46 der zweiten Rückenlehneneinheit 24 und die Auflagefläche 70 der dritten Rückenlehneneinheit 66 eine knickfreie Auflagefläche.

Figur 5 zeigt den Fluggastsitz 10 in der Ausführung der Figur 3 in einer Detailansicht. Es sind die zweite Rückenlehneneinheit 24 und die dritte Rückenlehneinheit 66 im Koppelbereich 74 dargestellt. Die Lordosenstütze 68 ist mittels der Schwenkachseneinheit 78 der Lagervorrichtung 76 um die Schwenkachse 80 relativ zur Rückenlehnenplatte 44 schwenkbar gelagert. Die zweite Rückenlehneneinheit 24 weist, zusätzlich zur Rückenlehnenplatte 44, ein längliches Element 96 auf, welches mit der Rückenlehnenplatte 44 starr gekoppelt ist und in Bezug auf die Sitzrichtung 16 hinter der Lordosenstütze 68 angeordnet ist. Die Rückenlehnenplatte 44 und das Element 96 als Bestandteile der zweiten Rückenlehneneinheit 24 führen Schwenkbewegungen um die Schwenkachse 51 aus, wie anhand des ersten Ausführungsbeispiels erörtert. Hierzu ist die Schwenkachseneinheit 50 der Lagereinheit 42 an den Rahmenteilen 28 der ersten Rückenlehneneinheit 22 befestigt.

Das Element 96 weist an einer Seitenfläche eine Aussparung 100 auf, in welcher das als Federelement ausgebildete Kopplungsmittel 61 gelagert ist. Wie oben anhand der Figur 4 schon beschrieben, ist das Kopplungsmittel 61 am Kopplungspunkt 88 mit der Kopplungsstange 86 gekoppelt, die wiederum mit der Aufständereinheit 19 gekoppelt ist. Die Koppel 92 des Koppelgetriebes 82 greift an den Kopplungspunkt 88 an und ist am Kopplungspunkt 94 (Figur 4) auf der Rückseite der Lordosenstütze 68 gekoppelt.

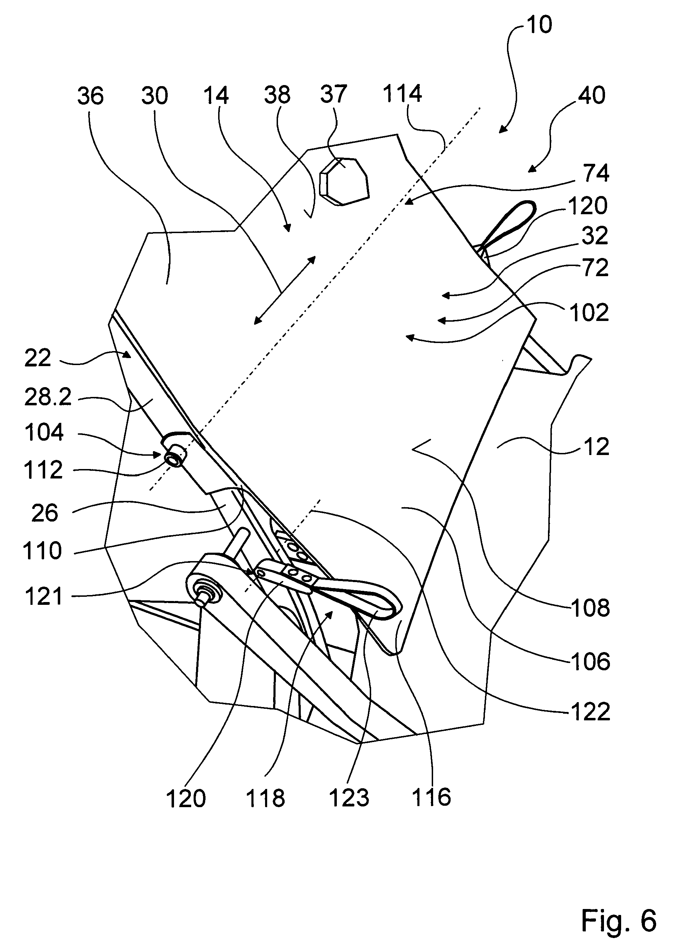

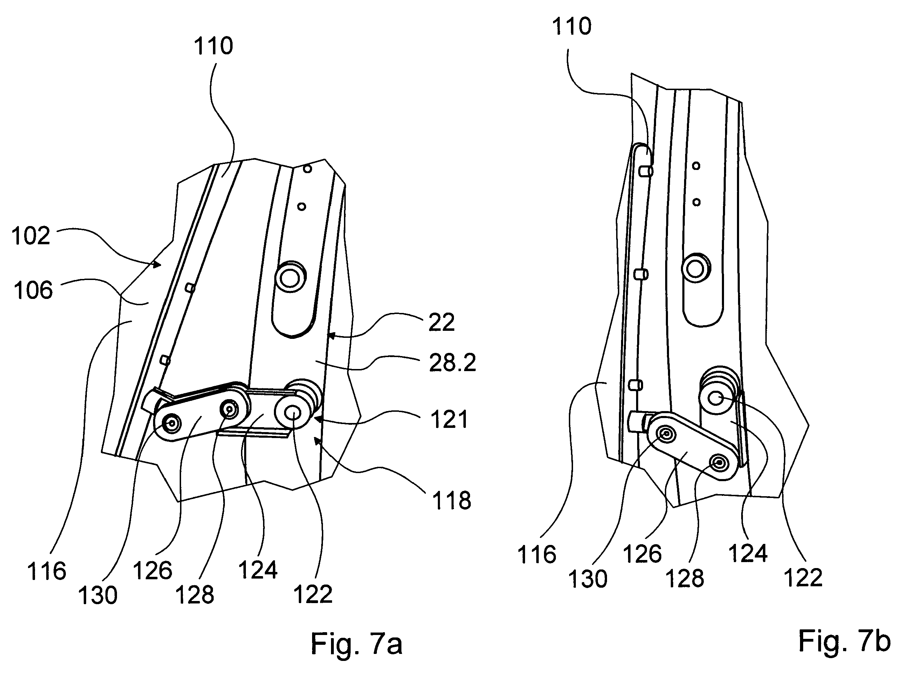

Die Figuren 6, 7a und 7b zeigen den Fluggastsitz 10 in einer weiteren Ausführung der erfindungsgemäßen Fluggastsitzvorrichtung 40. Der Übersichtlichkeit halber werden Bauteile, deren Aufbau und/oder Funktion dem ersten Ausführungsbeispiel entspricht, mit den gleichen Bezugszeichen bezeichnet.

Figur 6 zeigt eine Detailansicht des Fluggastsitzes 10. Er weist, wie in den vorherigen Ausführungsbeispielen, eine Sitzeinheit 12 und eine Rückenlehne 14 auf. Die Rückenlehne 14 umfasst eine erste Rückenlehneneinheit 22, die einen Rückenlehnenrahmen 26 aufweist, der als ein U-förmig gebogenes Bauteil ausgeformt ist. Dieses weist zwei Rahmenteile 28 auf, die jeweils einem Schenkel der U-Form entsprechen und sich in Längsrichtung der Rückenlehne 14 erstrecken. Die Rahmenteile 28 sind als längliche Bauteile ausgebildet, die, bezüglich der Sitzquerrichtung 30, an gegenüberliegenden Seiten der Rückenlehne 14 angeordnet sind. Die Rahmenteile 28 sind voneinander in Sitzquerrichtung 30 beabstandet und bilden einen Zwischenraum 32. Die Rahmenteile 28 sind mittels eines weiteren Rahmenteils 34 miteinander verbunden (siehe Figur 1), welches sich horizontal in Sitzquerrichtung 30 erstreckt und im Zusammenwirken mit den Rahmenteilen 28 die U-Form bildet. An der Frontseite des Rückenlehnenrahmens 26 ist eine Abdeckung 36 aus einem Stoff angebracht, die eine Auflagefläche 38 zur Auflage einer Rückenlehnenpolstereinheit 37 bildet. Der Übersichtlichkeit halber ist die Rückenlehnenpolstereinheit 37 lediglich teilweise dargestellt. Die Auflagefläche 38 erstreckt sich in Sitzquerrichtung 30 von einer Seite der Rückenlehne 14 bis zur gegenüberliegenden Seite der Rückenlehne 14.

Die Rückenlehne 14 weist ferner eine zweite Rückenlehneneinheit 102 auf, die mittels einer Lagereinheit 104 relativ zur ersten Rückenlehneneinheit 22 beweglich gelagert ist. Die zweite, bewegliche Rückenlehneneinheit 102 weist eine Lordosenstütze 106 auf, welche eine Auflagefläche 108 zur Auflage der Rückenlehnenpolstereinheit 37 in deren Lordosenbereich 72 bildet. Diese Auflagefläche 108 ist demnach im unteren Bereich der Rückenlehne 14 angeordnet und erstreckt sich vom unteren Randbereich der Rückenlehne 14 bis zu einem Koppelbereich 74, in dem die Lordosenstütze 106 an der ersten Rückenlehneneinheit 22 gekoppelt ist. Die Auflagefläche 108 weist eine Erstreckung in Längsrichtung der Rückenlehne 14 auf, die zwischen 30% und 50% der gesamten Erstreckung der Rückenlehne 14 in deren Längsrichtung beträgt. Die zweite Rückenlehneneinheit 102 weist zwei Stützelemente 110 auf und die Lagereinheit 104 umfasst eine Schwenkachseneinheit 112, die jeweils ein Stützelement 110 der zweiten Rückenlehneneinheit 102 an einem Rahmenteil 28 der ersten Rückenlehneneinheit 22 schwenkbar lagert. Die Schwenkachseneinheit 112 bildet eine Schwenkachse 114, um welche die Stützelemente 110 der zweiten Rückenlehneneinheit 102 schwenkbar gelagert sind. An den Stützelementen 110 ist eine Abdeckung 116 angebracht, welche mit den Stützelementen 110 die Lordosenstütze 106 und deren Auflagefläche 108 bildet. Im betrachteten Ausführungsbeispiel ist die Abdeckung 116 mit der Abdeckung 36 einstückig ausgebildet, so dass die Auflageflächen 38 und 108 Bestandteile einer kontinuierlichen, zusammenhängenden Auflagefläche sind.

Die Lagereinheit 104 lagert die Lordosenstütze 106 beweglich zwischen zwei stabilen Endpositionen. Die Lordosenstütze 106 ist in der Figur 6 in einer ausgeklappten Position gezeigt, in welcher die Lordosenstütze 106 ihre Stützfunktion zur Unterstützung des unteren Wirbelsäulenbereichs eines sitzenden Passagiers annimmt. In dieser Konfiguration ist das untere Ende des Stützelements 110 von dem Rahmenteil 28.2 entfernt, wobei die Auflagefläche 108 relativ zur Auflagefläche 38 geneigt ist und ein Knickbereich an der Grenze zwischen beiden Auflageflächen 38, 108 entsteht. Ausgehend von dieser ersten Endposition kann die Lordosenstütze 106 relativ zur ersten Rückenlehneneinheit 22 nach hinten entgegen der Sitzrichtung 16 um die Schwenkachse 114 geklappt werden. In der zweiten Endposition (Figur 7b) sind die unteren Enden der Stützelemente 110 an den Rahmenteilen 28 der ersten Rückenlehneneinheit 22 angenähert, wobei ein knickfreier Übergang zwischen den Auflageflächen 38, 108 erreicht werden kann.

Diese Bewegung der Lordosenstütze 106 zwischen den ersten und zweiten Endpositionen kann wahlweise durch einen Passagier ausgelöst werden, und zwar mit Hilfe einer Betätigungseinheit 118. Diese weist Betätigungsglieder 120 auf, die jeweils an einem Rahmenteil 28 der ersten Rückenlehneneinheit 22 um eine von einer Schwenkachseneinheit 121 gebildete Schwenkachse 122 schwenkbar befestigt sind. Die Betätigungsglieder 120 sind dazu vorgesehen, von einem Passagier betätigt zu werden. An den Betätigungsgliedern 120 ist jeweils ein Griffteil 123 gekoppelt, welches zu einer einfachen Bedienung durch einen Passagier vorgesehen ist. Im betrachteten Ausführungsbeispiel sind die Griffteile 123 als Schlaufen ausgebildet, wobei weitere, dem Fachmann als sinnvoll erscheinende Ausführungen denkbar sind. Durch die Anordnung der Betätigungsglieder 120 jeweils an einem Rahmenteil 28 wird ein bestehender Bauraum vorteilhaft ausgenutzt, wobei kein zusätzlicher Bauraum für die Betätigungseinheit 118 beansprucht werden muss. Die Betätigungsglieder 120 sind beidseitig der Lordosenstütze 106 angeordnet. Ferner sind die Betätigungsglieder 120 voneinander ungekoppelt, so dass sie voneinander unabhängig betätigbar sind. Eine Betätigung eines der Betätigungsglieder 120 ist auf einen Zustand des anderen der Betätigungsglieder 120 wirkungslos. Die Bewegung der Lordosenstütze 106 von einer Endposition in die andere Endposition erfolgt durch simultane oder zeitlich getrennte Betätigungen der Betätigungsglieder 120 durch einen Bediener. Wird lediglich ein Betätigungsglied 120 betätigt, kann eine Schrägstellung der Lordosenstütze 106 erreicht werden, die von einem Passagier als weitere Komfortposition gewählt werden kann. In dieser Schrägstellung ist eines der Stützelemente 110 der zweiten Rückenlehneneinheit 102 an der ersten Rückenlehneneinheit 22 angeklappt, während das untere Ende des zweiten Stützelements 110 sich in einer von der ersten Rückenlehneneinheit 22 entfernten Stellung befindet. Diese Schrägstellung ist in der Figur 6 dargestellt. In einer weiteren Ausführung ist jedoch denkbar, dass die Betätigungseinheit 118 Betätigungsglieder aufweist, die über eine Kopplungseinrichtung miteinander gekoppelt sind, so dass eine Betätigung eines der Betätigungsglieder durch einen Bediener eine Betätigung des anderen Betätigungsglieds automatisch bewirkt. Beispielsweise kann die Kopplungseinrichtung als Bowdenzug ausgebildet sein.

Die Betätigungseinheit 118 wird anhand der Figuren 7a und 7b weiter beschrieben. Diese zeigen eine Detailansicht der Betätigungseinheit 118, wobei sich der Standpunkt im Zwischenraum 32 hinter der Lordosenstütze 106 befindet. Es ist insbesondere das Rahmenteil 28.2 der ersten Rückenlehneneinheit 22 zu sehen, an welchem das Betätigungsglied 120 (in der Figur nicht sichtbar) angeordnet ist (siehe Figur 6). Ferner ist das in Figur 6 gezeigte Stützelement 110 der zweiten Rückenlehneneinheit 102 zu erkennen, welches mit der Abdeckung 116 die Lordosenstütze 106 bildet, die von hinten zu sehen ist.

Das Betätigungsglied 120 ist Bestandteil eines Hebelmechanismus, welcher außerdem zwei als Hebelglieder ausgebildete Betätigungsglieder 124, 126 aufweist. Das Betätigungsglied 124 greift an der Schwenkachseneinheit 121 an, so dass es um die Schwenkachse 122 schwenkbar gelagert ist. Das Betätigungsglied 124 und das Betätigungsglied 120 sind an gegenüberliegenden Seiten des Rahmenteils 28.2 angeordnet. Durch die Schwenkachseneinheit 121 sind ferner das Betätigungsglied 120 und das Betätigungsglied 124 miteinander starr gekoppelt, so dass die Schwenkachseneinheit 121 bei einer durch einen Passagier ausgelösten Rotation des Betätigungsglieds 120 um die Schwenkachse 122 eine Rotation des Betätigungsglieds 124 um die Schwenkachse 122 bewirkt. Das Betätigungsglied 126 ist einerseits mit dem Betätigungsglied 124 über ein Gelenk 128 und andererseits mit dem Stützelement 110 der Lordosenstütze 106 über ein Gelenk 130 verbunden. Die Schwenkachseneinheit 121, die Betätigungsglieder 124, 126 und die Gelenke 128, 130 bilden einen Kniehebel.

Die in der Figur 7a gezeigte Konfiguration entspricht der in Figur 6 gezeigten Komfortposition der Lordosenstütze 106, bei welcher sich das untere Ende des Stützelements 110 in einer von der ersten Rückenlehneneinheit 22, und zwar vom Rahmenteil 28.2 entfernten Position befindet. In dieser Position befindet sich das Betätigungsglied 120 in einer ersten, beispielsweise horizontalen Endstellung (siehe Figur 6). Durch Drehen des Betätigungsglieds 120 in eine zweite, beispielsweise vertikale Endstellung wird das Betätigungsglied 124 geschwenkt, wobei über das Betätigungsglied 126 und die Gelenke 128, 130, die über einen Totpunkt bewegt werden, das Stützelement 110 in die an das Rahmenteil 28.2 angeklappte Position bewegt wird.

**Bezugszeichen**

| | | | |
|---|---|---|---|
| 10 | Fluggastsitz | 52 | Befestigungsmittel |
| 12 | Sitzeinheit | 54 | Kopplungspunkt |
| 13 | Sitzfläche | 56 | Endposition |
| 14 | Rückenlehne | 58 | Endposition |
| 16 | Sitzrichtung | 60 | Kopplungseinheit |
| 18 | Vertikale Richtung | 61 | Kopplungsmittel |
| 19 | Aufständereinheit | 62 | Kopplungspunkt |
| 20 | Flugzeugkabinenboden | 64 | Kopplungspunkt |
| 22 | Rückenlehneneinheit | 66 | Rückenlehneneinheit |
| 24 | Rückenlehneneinheit | 68 | Lordosenstütze |
| 26 | Rückenlehnenrahmen | 70 | Auflagefläche |
| 28 | Rahmenteil | 72 | Lordosenbereich |
| 30 | Sitzquerrichtung | 74 | Koppelbereich |
| 32 | Zwischenraum | 76 | Lagervorrichtung |
| 34 | Rahmenteil | 78 | Schwenkachseneinheit |
| 36 | Abdeckung | 80 | Schwenkachse |
| 37 | Rückenlehnenpolstereinheit | 82 | Koppelgetriebe |
| 38 | Auflagefläche | 84 | Kopplungspunkt |
| 39 | Kopfstützenbereich | 86 | Kopplungsstange |
| 40 | Fluggastsitzvorrichtung | 88 | Kopplungspunkt |
| 42 | Lagereinheit | 90 | Kopplungspunkt |
| 44 | Rückenlehnenplatte | 92 | Koppel |
| 46 | Auflagefläche | 94 | Kopplungspunkt |
| 48 | Rumpfbereich | 96 | Element |
| 50 | Schwenkachseneinheit | 100 | Aussparung |
| 51 | Schwenkachse | 102 | Rückenlehneneinheit |
| 104 | Lagereinheit | 121 | Schwenkachseneinheit |
| 106 | Lordosenstütze | 122 | Schwenkachse |
| 108 | Auflagefläche | 123 | Griffteil |
| 110 | Stützelement | 124 | Betätigungsglied |
| 112 | Schwenkachseneinheit | 126 | Betätigungsglied |
| 114 | Schwenkachse | 128 | Gelenk |
| 116 | Abdeckung | 130 | Gelenk |
| 118 | Betätigungseinheit | F, F' | Kraft |
| 120 | Betätigungsglied | | |

## Patentansprüche

1. Fluggastsitzvorrichtung mit einer Rückenlehne (14), die eine erste Rückenlehneneinheit (22), eine zweite Rückenlehneneinheit (24; 102) und eine Lagereinheit (42; 104) aufweist, die die zweite Rückenlehneneinheit (24; 102) relativ zur ersten Rückenlehneneinheit (22) beweglich lagert, wobei zumindest die zweite Rückenlehneneinheit (24; 102) eine Auflagefläche (46; 108) zur Auflage einer Polstereinheit (37) bildet, wobei die Lagereinheit (42) die zweite Rückenlehneneinheit (24) zwischen zwei Endpositionen (56, 58) relativ zur ersten Rückenlehneneinheit (22) beweglich lagert, **dadurch gekennzeichnet, dass** die Rückenlehne (14) eine Kopplungseinheit (60) aufweist, die derart ausgelegt ist, dass eine auf die Auflagefläche (46) ausgeübte Kraft (F, F') eine Bewegung der zweiten Rückenlehneneinheit (24) aus einer Endposition (56, 58) bewirkt, wobei die Kopplungseinheit (60) ein als Federmittel ausgebildetes Kopplungsmittel (61) aufweist und dazu vorgesehen ist, die Endpositionen (56, 58) mittels einer von dem Kopplungsmittel (61) erzeugten Federkraft als stabile Endpositionen festzulegen.

2. Fluggastsitzvorrichtung nach Anspruch 1, **dadurch gekennzeichnet, dass** die erste Rückenlehneneinheit (22) und die zweite Rückenlehneneinheit (24) im Zusammenwirken eine Auflagefläche zur Auflage einer Polstereinheit (37) bilden, wobei die zweite Rückenlehneneinheit (24) zumindest einen überwiegenden Teil der Auflagefläche bildet.

3. Fluggastsitzvorrichtung nach einem der vorhergehenden Ansprüche, **gekennzeichnet durch** eine Aufständereinheit (19) zum Aufständern auf einem Flugzeugkabinenboden (20), wobei die erste Rückenlehneneinheit (22) mit der Aufständereinheit (19) starr verbunden ist.

4. Fluggastsitzvorrichtung nach einem der vorhergehenden Ansprüche, **dadurch gekennzeichnet, dass** die erste Rückenlehneneinheit (22) einen Rückenlehnenrahmen (26) mit zumindest zwei Rahmenteilen (28.1, 28.2) aufweist und die zweite Rückenlehneneinheit (24; 102) zwischen den Rahmenteilen (28.1, 28.2) angeordnet ist.

5. Fluggastsitzvorrichtung nach Anspruch 1, **dadurch gekennzeichnet, dass** die Kopplungseinheit (60) ein Federelement aufweist.

6. Fluggastsitzvorrichtung nach einem der vorhergehenden Ansprüche, **dadurch gekennzeichnet, dass** die Rückenlehne (14) eine dritte Rückenlehneneinheit (66) und eine Lagervorrichtung (76) aufweist, die die dritte Rückenlehneneinheit (66) relativ zur zweiten Rückenlehneneinheit (24) beweglich lagert.

7. Fluggastsitzvorrichtung nach Anspruch 6, **dadurch gekennzeichnet, dass** die dritte Rückenlehneneinheit (66) eine Lordosenstütze (68) aufweist.

8. Fluggastsitzvorrichtung nach Anspruch 6 oder 7, **dadurch gekennzeichnet, dass** die Rückenlehne (14) ein Koppelgetriebe (82) aufweist, das bei einer Bewegung der zweiten Rückenlehneneinheit (24) relativ zur ersten Rückenlehneneinheit (22) eine Bewegung der dritten Rückenlehneneinheit (66) relativ zur zweiten Rückenlehneneinheit (24) bewirkt.

9. Fluggastsitzvorrichtung nach einem der Ansprüche 1 bis 4, **dadurch gekennzeichnet, dass** die zweite Rückenlehneneinheit (102) eine Lordosenstütze (106) aufweist, die Lagereinheit (104) die Lordosenstütze (106) zwischen zumindest zwei stabilen Positionen relativ zur ersten Rückenlehneneinheit (22) beweglich lagert und eine mechanische Betätigungseinheit (118) vorgesehen ist, die zum Auslösen einer Bewegung der Lordosenstütze (106) aus einer stabilen Position dient.

10. Fluggastsitzvorrichtung nach Anspruch 9, **dadurch gekennzeichnet, dass** die mechanische Betätigungseinheit (118) einen Hebelmechanismus aufweist.

11. Fluggastsitzvorrichtung nach Anspruch 9 oder 10, **dadurch gekennzeichnet, dass** die Betätigungseinheit (118) zwei Betätigungsglieder (120) aufweist, die beidseitig der Lordosenstütze (106) angeordnet sind und voneinander unabhängig betätigbar sind.

12. Fluggastsitzvorrichtung nach einem der Ansprüche 9 bis 11, **dadurch gekennzeichnet, dass** die erste Rückenlehneneinheit (22) einen Rückenlehnenrahmen (26) mit zumindest einem Rahmenteil (28) aufweist und die Betätigungseinheit (118) ein vom Passagier betätigbares Betätigungsglied (120) umfasst, das am Rahmenteil (28) angeordnet ist.

13. Fluggastsitzvorrichtung nach Anspruch 12, **dadurch gekennzeichnet, dass** die Betätigungseinheit (118) Betätigungsglieder (120, 124) aufweist, die an gegenüberliegenden Seiten des Rahmenteils (28) angeordnet sind.

## Claims

1. Flight passenger seating device with a backrest (14) comprising a first backrest unit (22), a second backrest unit (24;102) and a bearing unit (42 ;104) which supports the second backrest unit (24; 102) movably relative to the first backrest unit (22), wherein at least the second backrest unit (24; 102) forms a support surface (46; 108) to lay a cushion unit (37) on, the bearing unit (42) supporting the second backrest unit (24) movably between two end positions (56, 58) relative to the first backrest unit (22), **characterised in that** the backrest (14) comprises a coupling unit (60) which is designed in such a way that a force (F; F') exerted on the support surface (46) induces a movement of the second backrest unit (24) out of an end position (56, 58), the coupling unit (60) comprising a coupling means (61) embodied as a spring means and being provided to determine the end positions (56. 58) as stable end positions by means of a spring force generated by the coupling means (61).

2. Flight passenger seating device according to claim 1, **characterised in that** the first backrest unit (22) and the second backrest unit (24) together implement a support surface for laying a cushion unit (37) on, the second backrest unit (24) implementing at least a major part of the support surface.

3. Flight passenger seating device according to one of the preceding claims, **characterised by** a mounting unit (19) for mounting on an aircraft cabin floor (20), wherein the first backrest unit (22) is rigidly connected to the mounting unit (19).

4. Flight passenger seating device according to one of the preceding claims, **characterised in that** the first backrest unit (22) comprises a backrest frame (26) with at least two frame parts (28.1, 28.2) and the second backrest unit (24; 102) is arranged between the frame parts (28.1, 28.2).

5. Flight passenger seating device according to claim 1, **characterised in that** the coupling unit (60) comprises a spring element.

6. Flight passenger seating device according to one of the preceding claims, **characterised in that** the backrest (14) comprises a third backrest unit (66) and a bearing device (76), which supports the third backrest unit (66) movably relative to the second backrest unit (24).

7. Flight passenger seating device according to claim 6, **characterised in that** the third backrest unit (66) comprises a lumbar support (68).

8. Flight passenger seating device according to claim 6 or 7, **characterised in that** the backrest (14) comprises a coupling gear (82) which, in a movement of the second backrest unit (24) relative to the first backrest unit (22), induces a movement of the third backrest unit (66) relative to the second backrest unit (24).

9. Flight passenger seating device according to one of claims 1 to 4, **characterised in that** the second backrest unit (102) comprises a lumbar support (106), the bearing unit (104) supports the lumbar support (106) movably between at least two stable positions relative to the first backrest unit (22), and a mechanical actuation unit (118) is provided for triggering a movement of the lumbar support (106) out of a stable position.

10. Flight passenger seating device according to claim 9, **characterised in that** the mechanical actuation unit (118) comprises a lever mechanism.

11. Flight passenger seating device according to claim 9 or 10, **characterised in that** the actuation unit (118) comprises two actuation members (120), which are arranged on both sides of the lumbar support (106) and can be actuated independently from each other.

12. Flight passenger seating device according to one of claims 9 to 11, **characterised in that** the first backrest unit (22) comprises a backrest frame (26) with at least one frame part (28) and the actuation unit (118) comprises an actuation member (120), which can be actuated by the passenger and which is arranged on the frame part (28).

13. Flight passenger seating device according to claim 12, **characterised in that** the actuation unit (118) comprises actuation members (120, 124), which are arranged on opposite sides of the frame part (28).

## Revendications

1. Dispositif de siège de passager d'avion avec un dossier (14) comportant une première unité de dossier (22), une deuxième unité de dossier (24 ; 102) et une unité d'appui (42 ; 104), laquelle supporte la deuxième unité de dossier (24 ; 102) dans cette manière qu'elle est mobile relativement à la première unité de dossier (22),
au moins la deuxième unité de dossier (24 ; 102) formant une surface de portée (46 ; 108) pour porter une unité de rembourrage (37), l'unité d'appui (42) supportant la deuxième unité de dossier (24) dans cette manière qu'elle est mobile entre deux positions d'extrémité (56, 58) relativement à la première unité de dossier (22), **caractérisé en ce que** le dossier (14) comporte une unité de couplage (60), laquelle est conçue de cette manière qu'une force (F, F') exercée sur la surface de support (46) engendre un mouvement de la deuxième unité de dossier (24) d'une position d'extrémité (56, 58),
l'unité de couplage (60) comportant un moyen de couplage (61) implémenté comme moyen de ressort et prévu à déterminer les positions d'extrémité (56, 58) comme des positions d'extrémité stables par le biais d'une force de ressort générée par le moyen de couplage (61).

2. Dispositif de siège de passager d'avion selon la revendication 1, **caractérisé en ce que** la première unité de dossier (22) et la deuxième unité de dossier (24) ensemble forment une surface de portée pour porter une unité de rembourrage (37), la deuxième unité de dossier (24) implémentant au moins une plupart de la surface de portée.

3. Dispositif de siège de passager d'avion selon l'une quelconque des revendications précédentes, **caractérisé par** une unité de montant (19) pour monter sur un sol d'une cabine d'avion (20), la première unité de dossier (22) étant rigidement connectée avec l'unité de montant (19).

4. Dispositif de siège de passager d'avion selon l'une quelconque des revendications précédentes, **caractérisé en ce que** la première unité de dossier (22) comporte un cadre de dossier (26) avec au moins deux éléments de cadre (28.1, 28.2) et que la deuxième unité de dossier (24 ; 102) est disposée entre les éléments de cadre (28.1 ; 28.2).

5. Dispositif de siège de passager d'avion selon la revendication 1, **caractérisé en ce que** l'unité de couplage (60) comporte un élément de ressort.

6. Dispositif de siège de passager d'avion selon l'une quelconque des revendications précédentes, **caractérisé en ce que** le dossier (14) comporte une troisième unité de dossier (66) et un dispositif d'appui (76), lequel supporte la troisième unité de dossier (66) dans cette manière qu'elle est mobile relativement à la deuxième unité de dossier (24).

7. Dispositif de siège de passager d'avion selon la revendication 6, **caractérisé en ce que** la troisième unité de dossier (66) comporte un soutien lombaire (68).

8. Dispositif de siège de passager d'avion selon la revendication 6 ou 7, **caractérisé en ce que** le dossier (14) comporte un engrenage de couplage (82), lequel engendre, dans un mouvement de la deuxième unité de dossier (24) relativement à la première unité de dossier (22), un mouvement de la troisième unité de dossier (66) relativement à la deuxième unité de dossier (24).

9. Dispositif de siège de passager d'avion selon l'une quelconque des revendications 1 à 4, **caractérisé en ce que** la deuxième unité de dossier (102) comporte un soutien lombaire (106), que l'unité d'appui (104) support le soutien lombaire (106) dans cette manière qu'elle est mobile entre au moins deux positions stables relativement à la première unité de dossier (22) et qu'une unité d'actionnement mécanique (118) est prévue pour déclencher un mouvement du soutien lombaire (106) d'une position stable.

10. Dispositif de siège de passager d'avion selon la revendication 9, **caractérisé en ce que** l'unité d'actionnement mécanique (118) comporte un mécanisme de levier.

11. Dispositif de siège de passager d'avion selon la revendication 9 ou 10, **caractérisé en ce que** l'unité d'actionnement (118) comporte deux membres d'actionnement (120), lesquels sont disposés à les deux cotés du soutien lombaire (106) et peuvent être actionnés indépendamment l'un de l'autre.

12. Dispositif de siège de passager d'avion selon l'une quelconque des revendications 9 à 11, **caractérisé en ce que** la première unité de dossier (22) comporte un cadre de dossier (26) avec au moins un élément de cadre (28), et l'unité d'actionnement (118) comporte un membre d'actionnement (120) qui peut être actionné par le passager et est disposé à l'élément de cadre (28).

13. Dispositif de siège de passager d'avion selon la revendication 12, **caractérisé en ce que** l'unité d'actionnement (118) comporte des membres d'actionnement (120, 124) disposés aux côtés opposés de l'élément de cadre (28).
